# FASCICULE DE BREVET EUROPEEN

(11) **EP 0 932 051 B1**
(45) Date de publication et mention de la délivrance du brevet: **14.05.2008**
(21) Numéro de dépôt: 98101058.0
(22) Date de dépôt: 22.01.1998
(51) Int. Cl.: G01S 13/00, G01S 13/76

(54) **Système de communication électronique entre une station de base et des transpondeurs**
Elektronisches Kommunikationssystem zwischen einen Basis-Station und Transpondern
Electronic communication system between a base station and transponders

(43) Date de publication de la demande: 28.07.1999
(73) Titulaire: EM Microelectronic-Marin SA, 2074 Marin (CH)
(72) Inventeur: Maksimilijan, Stiglic, 2000 Maribor (SI)
(74) Mandataire: Ravenel, Thierry Gérard Louis

(56) Documents cités:
- EP-A- 0 427 342
- EP-A- 0 779 520
- US-A- 5 365 551

## Description

La présente invention est relative à un système de communication électronique sans contact ou système RFID. Ces systèmes, typiquement utilisés pour l'identification de personnes, d'animaux ou de biens (entre autres exemples : véhicules, articles nécessitant un marquage et sous-ensembles dans une chaîne de fabrication, etc.), comportent principalement un interrogateur/lecteur et un ou plusieurs transpondeurs associés chacun à un article devant être identifié.

L'interrogateur/lecteur émet un signal d'interrogation sous la forme d'un rayonnement électromagnétique. Les transpondeurs soumis à ce champ électromagnétique d'interrogation répondent par la génération d'un signal de réponse consistant normalement en une modulation de ce champ, et fournissant généralement un code/adresse identifiant le transpondeur.

Le brevet européen EP 0 161 779 décrit un tel système d'identification où l'interrogateur/lecteur est agencé pour réémettre le code d'identification transmis par un transpondeur. Chaque transpondeur comprend des moyens de comparaison du code d'identification réémis avec son propre code d'identification, et est agencé pour se déconnecter en cas de correspondance.

Le brevet EP 0 779 520 décrit un système ou un lecteur enregistre premièrement tous les codes d'identification de transpondeurs présents dans son champ de communication. Ensuite, le lecteur envoie un signal de sélection d'un transpondeur en envoyant son code d'identification. Le transpondeur ainsi sélectionné reste dans l'attente d'une instruction ultérieure du lecteur alors que les autres transpondeurs ne réagiront pas à cette instruction ultérieure puisque leur code d'identification n'a pas été envoyé par le lecteur.

La demande de brevet européen EP 0 585 132 décrit un autre système d'identification dans lequel le protocole d'identification est sensiblement simplifié. Dans ce système, l'interrogateur/lecteur est agencé pour émettre un signal de réception du message d'identification transmis par l'un des transpondeurs sous la forme d'une modification du signal d'interrogation. Cette modification est effectuée de manière synchrone avec le signal de réponse, chaque transpondeur étant agencé pour cesser la transmission du signal de réponse sur détection de ladite modification du signal d'interrogation.

Le système d'identification décrit dans la demande susmentionnée offre une solution simple et fiable au problème d'identification et de comptage d'une pluralité de transpondeurs. Ce système n'offre cependant qu'une action restreinte à la transmission d'un ordre d'inhibition du transpondeur identifié, et est ainsi limité aux applications d'identification et de comptage d'une pluralité de transpondeurs.

Un but de la présente invention est de proposer un système de communication qui, outre la fonction d'identification d'une pluralité de transpondeurs, permet à l'interrogateur/lecteur (ci-après référé en tant que station de base) de commander sélectivement les transpondeurs et/ou d'échanger sélectivement des informations avec ces transpondeurs.

L'invention a donc pour objet un système de communication électronique sans contact, comprenant une station de base et une pluralité de transpondeurs, ladite station de base comprenant des moyens de transmission pour émettre un champ électromagnétique définissant un volume de communication dans lequel sont susceptibles de se trouver plusieurs transpondeurs, chaque transpondeur comprenant des moyens de réception dudit champ électromagnétique et des moyens pour générer, en réponse audit champ électromagnétique, un message d'identification contenant un code d'identification susceptible d'être lu par la station de base. Cette station de base comprend en outre des moyens de réception dudit message d'identification émanant d'un quelconque transpondeur parmi ladite pluralité de transpondeurs, et des moyens de traitement permettant la vérification de la validité dudit message d'identification. Ce système de communication est caractérisé en ce que la station de base comprend des moyens pour fournir un signal d'ouverture de communication à chaque transpondeur dont elle reçoit un message d'identification, ce signal d'ouverture étant généré dans une ou plusieurs période(s) prédéfinie(s) relativement à la génération du message d'identification par chaque transpondeur, chaque transpondeur étant agencé pour ouvrir une fenêtre de communication en réponse audit signal d'ouverture de communication seulement lorsque celui-ci est reçu durant la ou les période(s) prédéfinie(s).

Il résulte de ces caractéristiques que le système de communication offre des possibilités étendues de communication entre la station de base et les transpondeurs.

Un avantage de la présente invention est de pouvoir communiquer sélectivement avec chaque transpondeur interrogé. Chaque transpondeur étant identifié individuellement par la station de base, seul ledit transpondeur identifié entre en communication avec la station de base.

Un autre avantage de la présente invention est de permettre plusieurs modes de communication entre la station de base et les transpondeurs, par exemple un mode de commande où au moins une commande est fournie au transpondeur pour être exécutée ultérieurement, ou un mode de lecture où la station de base lit au moins une information stockée dans la mémoire du transpondeur. Un mode mixte combinant commande(s) et lecture(s) peut aisément être prévu dans le cadre de l'invention.

Un autre avantage de la présente invention est de pouvoir adapter la communication entre la station de base et les transpondeurs de manière sélective en fonction de l'identification émise par ceux-ci. Il est en effet possible par la présente invention de générer une communication spécifique pour chaque transpondeur identifié dans un système évolué.

D'autres caractéristiques et avantages de l'invention apparaîtront au cours de la description qui va suivre, donnée uniquement à titre d'exemple et faite en se référant aux dessins annexés sur lesquels :
- la figure 1 est un schéma bloc d'un transpondeur du type utilisé dans la présente invention;
- la figure 2 représente de façon schématique le principe de fonctionnement du système de communication selon l'invention;
- la figure 3 montre schématiquement un exemple d'émission d'un message d'identification émanant de deux transpondeurs soumis à un champ électromagnétique d'interrogation selon l'invention;
- la figure 4 montre un exemple de codage du type Manchester;
- la figure 5 présente la structure d'un message d'identification ainsi qu'un exemple d'un signal d'ouverture de dialogue selon l'invention;
- les figures 6A à 6C représentent différents modes de mise en oeuvre du système de communication selon l'invention; et
- la figure 7 illustre la situation où aucune communication n'est reçue par le transpondeur.

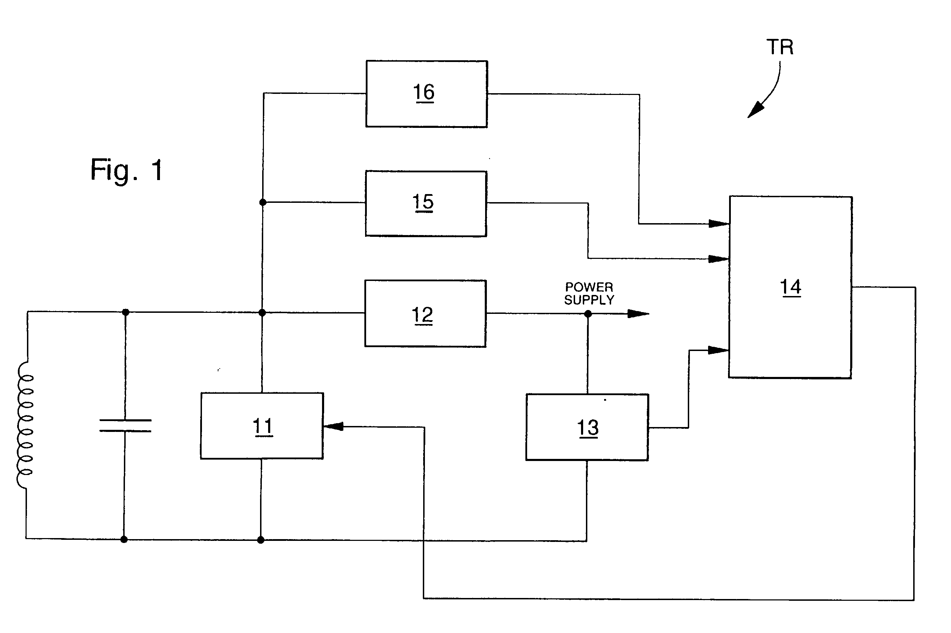

Dans l'exemple décrit ci-après, les transpondeurs utilisés dans le système de communication sont préférablement de type passif. Ceci ne constitue toutefois pas une limitation, des transpondeurs de type actif pouvant également être employés. La figure 1 présente un schéma bloc d'un tel transpondeur repéré par la référence générale TR. Celui-ci comporte un circuit résonant formé typiquement d'une inductance et d'une capacité (non référencées) connectées en parallèle, et d'un circuit électronique pouvant aisément être réalisé sur un même composant intégré. Un modulateur 11 permet l'encodage de l'information à transmettre à la station de base par commutation de charge du circuit résonant. Le couplage électromagnétique ainsi produit est détecté par la station de base. L'alimentation du circuit électronique est extraite du champ électromagnétique ambiant par le biais du circuit résonant puis redressée par un redresseur 12.

Un circuit d'initialisation 13 permet d'initialiser une unité de logique 14 lorsque l'alimentation est suffisante pour garantir le bon fonctionnement opératoire du transpondeur. Un signal d'horloge est extrait de la fréquence du champ électromagnétique ambiant par le biais des moyens d'extraction d'horloge 15. Tous les transpondeurs fonctionnent ainsi de manière synchrone avec la station de base.

Une bascule monostable 16 permet en outre la détection d'interruptions du champ électromagnétique. Sa constante de temps a une valeur correspondant à plusieurs périodes du champ électromagnétique. L'unité de logique 14 du transpondeur comprend en outre des moyens de mémorisation (ROM et EEPROM ou autres types de mémoires) contenant un code/adresse du transpondeur et toute autre information enregistrée à la fabrication ou ultérieurement.

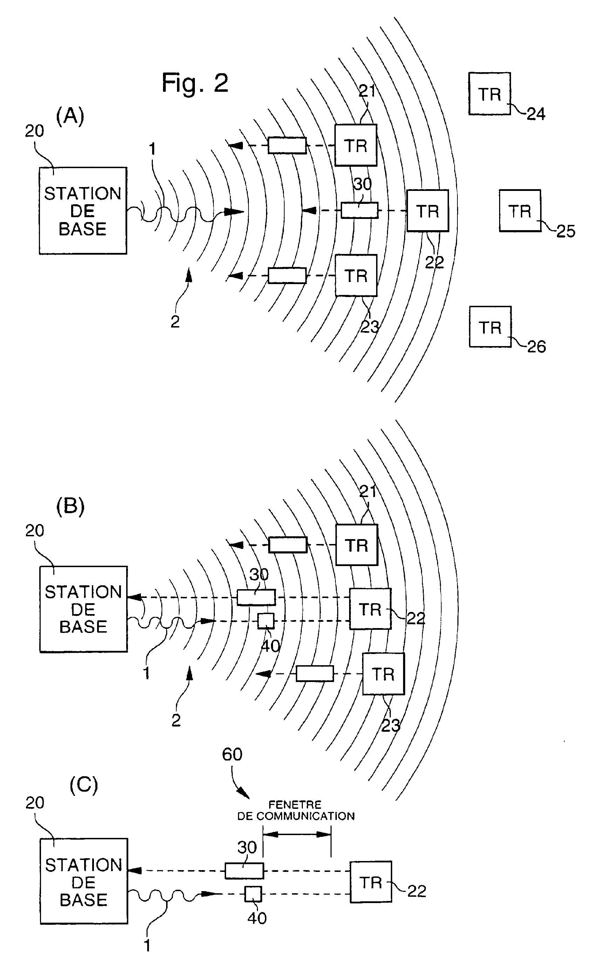

La figure 2 représente de façon schématique le principe de fonctionnement du système de communication selon la présente invention. La station de base 20 effectue des opérations selon un déroulement qui peut globalement être décomposé en trois phases, une phase d'interrogation (A), une phase d'identification et d'ouverture de communication (B) et une phase de communication (C), cette distinction étant définie ici uniquement de manière à expliquer le fonctionnement du système de communication décrit dans la présente invention. Comme mentionné plus haut, les transpondeurs 21 à 26 sont repérés par l'abréviation TR.

La phase d'interrogation (A) est caractérisée par l'émission par la station de base 20 d'un champ électromagnétique 1 à une fréquence déterminée. Ce champ électromagnétique 1 définit un volume de communication 2 dans lequel un ou plusieurs transpondeurs 21, 22 et 23 parmi la pluralité des transpondeurs 21 à 26 sont susceptibles de se trouver. Les transpondeurs 21, 22 et 23 se trouvant englobés dans le volume de communication 2 sont activés et interprètent la présence du champ électromagnétique 1 comme un signal d'interrogation. Chaque transpondeur 21, 22 et 23 ainsi soumis au champ électromagnétique 1 répond à cette interrogation par la génération d'un message d'identification 30 propre à chacun d'eux.

La phase d'identification et d'ouverture de communication (B) débute lors de la réception par la station de base 20 d'un message d'identification 30 émanant d'un quelconque transpondeur parmi les transpondeurs 21, 22 et 23 soumis au champ électromagnétique 1, dans l'exemple le transpondeur 22. Sur réception du message d'identification 30, la station de base 20 procède alors à la vérification du message d'identification 30. Parallèlement, la station de base 20 génère un signal bref 40, référé dans la présente invention en tant que signal d'ouverture de communication, sous la forme d'une modification du champ électromagnétique 1 indiquant au transpondeur sélectionné 22 que son message d'identification 30 est en cours de traitement et qu'il doit, au terme de l'émission de celui-ci, ouvrir une fenêtre de communication 60. Ce signal d'ouverture de communication 40 est généré durant une période prédéfinie relativement à la génération dudit message d'identification 30, c'est-à-dire soit durant ou à la fin de l'émission du message d'identification 30. Les transpondeurs 21 à 26 sont de ce fait agencé pour recevoir le signal d'ouverture de communication 40 seulement durant cette période prédéfinie.

La phase de communication (C) en tant que telle débute après l'accomplissement de la vérification du message d'identification 30 transmis par le transpondeur identifié 22. Dès l'ouverture de la fenêtre de communication 60, la station de base 20 et le transpondeur identifié 22 ont la possibilité d'entrer en communication et d'échanger de l'information.

De préférence, il est prévu d'utiliser des modulations distinctes pour générer le message d'identification 30 et les signaux échangés durant la fenêtre de communication 60, de manière à éviter qu'un message d'identification 30 émanant d'un autre transpondeur soit considéré par le transpondeur sélectionné 22 comme une communication émanant de la station de base 20.

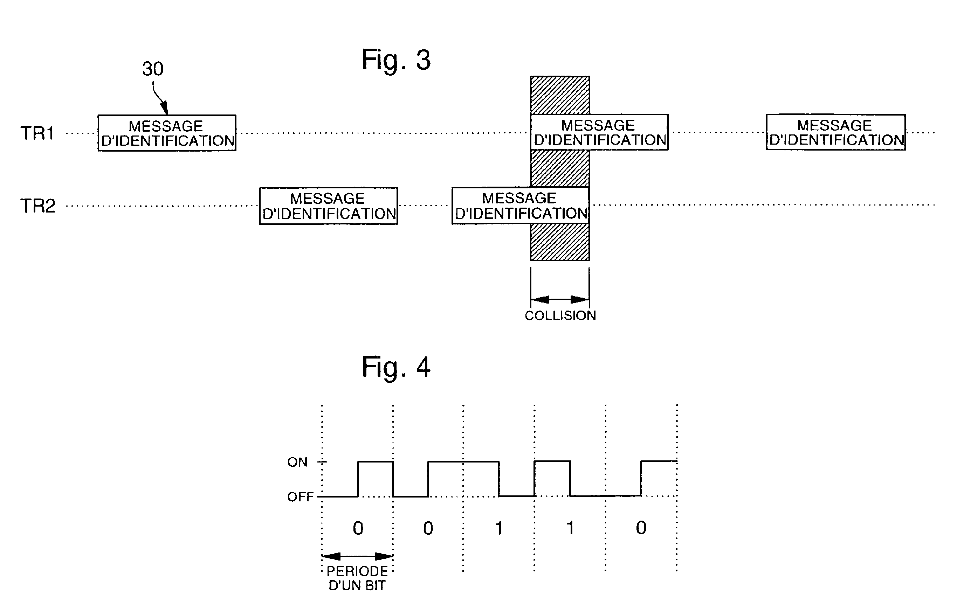

Dans la présente invention, le message d'identification 30 est préférablement répété après de longues pauses de durée aléatoire pendant lesquelles le transpondeur TR reste inactif, ceci permettant à la station de base 20 de capter un message d'identification 30 émanant d'un autre transpondeur tout en évitant que, dans le pire des cas, deux ou plusieurs messages d'identification 30 rentrent perpétuellement en collision. A cet effet, la figure 3 présente schématiquement un exemple d'émission d'un message d'identification 30 dans le cas où deux transpondeurs sont soumis au champ électromagnétique 1. Il est important de noter que la durée des pauses est sensiblement plus longue que la durée d'émission du message d'identification 30. De ce fait, les pauses représentées dans la figure 3 ont été réduites pour faciliter l'illustration du problème de collision.

Plusieurs types de codage peuvent être utilisés pour coder les signaux échangés entre la station de base 20 et les transpondeurs TR. Un codage du type Manchester est utilisé à titre d'exemple uniquement dans la suite de la description. La figure 4 présente un tel exemple de codage de type Manchester. Ce type de codage est caractérisé par une transition négative ou positive au milieu de la période d'un bit. "1" est représenté par la séquence ON-OFF et "0" est représenté par la séquence OFF-ON. La période d'un bit est fixée à un multiple de la période du champ électromagnétique 1.

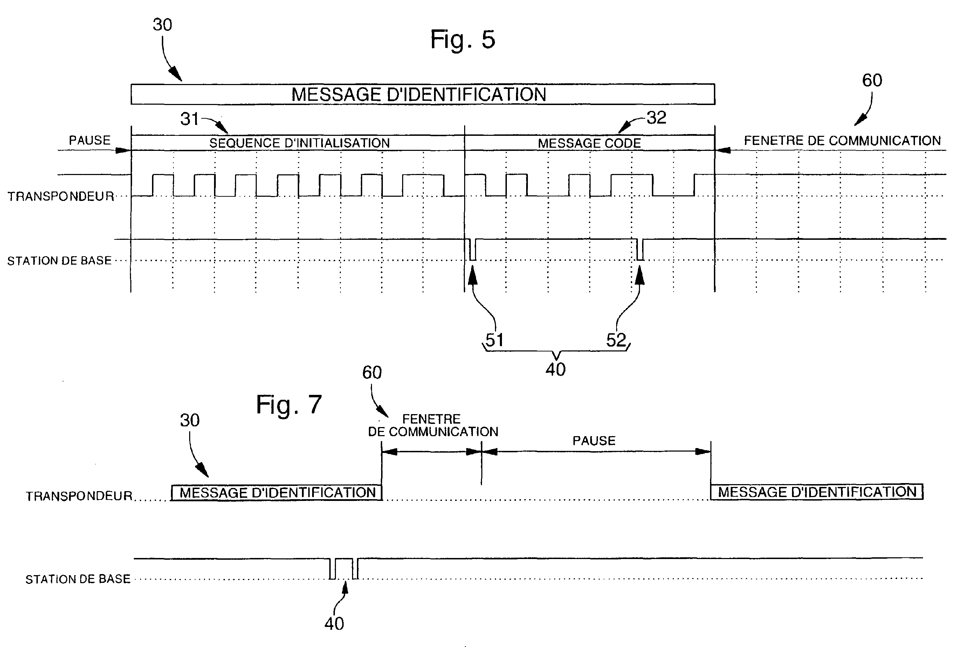

La figure 5 présente un exemple de la structure d'un message d'identification 30 tel que défini dans la présente invention. Ce message d'identification 30 se compose d'une première séquence d'initialisation 31 utilisée pour synchroniser la station de base 20 sur le message codé 32 suivant directement cette séquence d'initialisation 31, le message codé 32 contenant un code d'identification du transpondeur. Dans l'exemple de la figure 5, la séquence d'initialisation 31, ici sept bits à 0 suivi d'un bit à 1, est suivie par un message codé 32 d'une longueur de 5 bits.

Le signal d'ouverture de communication 40 transmis par la station de base 20 est obtenu par une ou plusieurs interruptions momentanées du champ électromagnétique 1 durant une période prédéfinie relativement à la génération du message d'identification 30, ces interruptions ayant une durée plus courte que la période d'un bit. Dans l'exemple de la figure 5, le signal d'ouverture de communication 40 est constitué par deux interruptions momentanées 51 et 52 du champ électromagnétique 1 durant les bits 1 et 5 du message codé qui suit la séquence d'initialisation. Une interruption peut être effectuée à n'importe quel moment durant la période d'un bit mais préférablement durant la période où le modulateur 11 (figure 1) est sur ON. En effet, durant cette période, le circuit résonant est déchargé de sorte que l'oscillation propre du transpondeur est plus rapidement amortie que durant la période où le commutateur est sur OFF. La bascule monostable 16 en conjonction avec l'unité de logique 14 sont ici adaptés pour détecter les interruptions du champ électromagnétique durant les bits 1 et 5 du message codé. Il est important de noter que l'exemple de la figure 5 ne constitue qu'une variante possible de la structure d'un message d'identification 30 et d'un signal d'ouverture de communication 40.

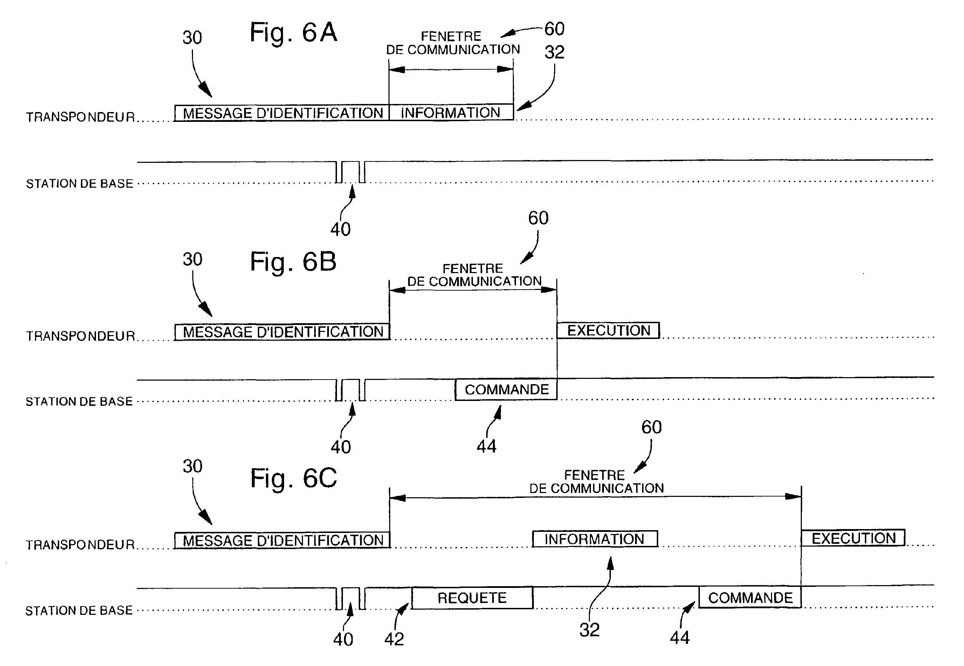

Sur les figures 6A à 6C sont représentés différents modes de réalisation de la présente invention. D'autres modes de réalisation peuvent être envisagés par l'homme du métier.

La figure 6A représente un premier mode de réalisation de l'invention dans lequel le transpondeur identifié 22 transmet simplement une information 32 vers la station de base 20 durant la fenêtre de communication 60. Dans ce mode de réalisation, le signal d'ouverture de communication 40 est par défaut interprété par le transpondeur identifié 22 comme une requête d'information, celui-ci ouvrant ainsi une fenêtre de communication 60 pour transmettre l'information requise 32. Ce mode de réalisation peut typiquement être appliqué à la gestion de biens où l'on désire uniquement obtenir une information précise stockée dans la mémoire du transpondeur identifié 22, par exemple le prix d'un article ou la date limite de vente d'un produit destiné à la consommation.

La figure 6B décrit un autre mode de réalisation de l'invention dans lequel la station de base 20 transmet une commande 44 devant ultérieurement être exécutée par le transpondeur identifié 22. En réponse au signal d'ouverture de communication 40, le transpondeur identifié 22 ouvre ainsi une fenêtre de communication 60 pour recevoir une commande 44 de la part de la station de base 20. Cette commande 44 est interprétée et par la suite exécutée par le transpondeur identifié 22. Ce mode de réalisation est typiquement applicable à des systèmes antivol ou de contrôle d'accès.

La figure 6C décrit un autre mode de réalisation de l'invention dans lequel la station de base 20 transmet, dans un premier temps, une requête d'information 42 stockée dans la mémoire du transpondeur identifié 22 puis, dans un deuxième temps, une commande 44 que le transpondeur identifié 22 doit ultérieurement exécuter. En réponse au signal d'ouverture de communication 40, le transpondeur identifié 22 ouvre ainsi une fenêtre de communication 60 lui permettant de successivement recevoir la requête d'information 42, de transmettre l'information 32 requise et de finalement recevoir la commande 44. Ce mode de réalisation offre la possibilité d'adapter la commande 44 en fonction de l'information 32 transmise par le transpondeur identifié.

La figure 7 illustre la situation où aucun signal contenant une requête, une commande ou tout autre information n'est reçu par le transpondeur identifié 22 dans les modes de réalisation représentés aux figures 6B et 6C. Chaque transpondeur TR est en effet agencé pour détecter si un signal est émis par la station de base 20 durant une période de durée prédéfinie au début de la fenêtre de communication 60. Si aucun signal contenant de l'information n'est détecté, le transpondeur identifié 22 ferme la fenêtre de communication 60 et continue à émettre son message d'identification 30 après une pause.

On notera que la durée de la fenêtre de communication 60 peut être variable, la fin de ladite fenêtre de communication 60 pouvant être associée à la fin de la transmission d'une information 32 tel que décrit dans le mode de réalisation de la figure 6A, à une commande 44 tel que décrit dans les modes de réalisation des figures 6B et 6C, ou à l'absence d'échange d'information durant la période de durée prédéfinie au début de la fenêtre de communication 60 (figure 7).

## Revendications

1. Système de communication comprenant une station de base (20) et une pluralité de transpondeurs (TR; 21 à 26), la station de base (20) comprenant des moyens de transmission pour émettre un champ électromagnétique (1) définissant un volume de communication (2) dans lequel sont susceptibles de se trouver plusieurs transpondeurs (21, 22, 23), chaque transpondeur (TR; 21 à 26) comprenant des moyens de réception dudit champ électromagnétique (1), et des moyens pour générer, en réponse audit champ électromagnétique (1), un message d'identification (30) contenant un code d'identification_ susceptible d'être lu par la station de base (20), cette station de base (20) comprenant en outre des moyens de réception du message d'identification (30) émanant d'un quelconque transpondeur (22) parmi ladite pluralité de transpondeurs (TR; 21 à 26) et des moyens de traitement permettant la vérification dudit message d'identification (30), la station de base (20) comprenant des moyens pour fournir un signal d'ouverture de communication (40) à chaque transpondeur (21, 22, 23) dont elle reçoit un message d'identification (30), ce système de communication étant **caractérisé en ce que** ce signal d'ouverture est généré dans une ou plusieurs période(s) prédéfinie(s) relativement à la génération dudit message d'identification par chaque transpondeur, chaque transpondeur (TR; 21 à 26) étant agencé pour ouvrir une fenêtre de communication (60) en réponse audit signal d'ouverture de communication (40) seulement lorsque celui-ci est reçu durant la ou les période(s) prédéfinie(s).

2. Système de communication selon la revendication 1, **caractérisé en ce que** ledit signal d'ouverture de communication (40) est généré durant ledit message d'identification (30).

3. Système de communication selon la revendication 2, **caractérisé en ce que** ledit signal d'ouverture de communication (40) se compose d'une ou plusieurs interruption(s) momentanée(s) (50, 51) du champ électromagnétique (1), chaque interruption étant effectuée dans la période d'un bit.

4. Système de communication selon l'une quelconque des revendications 1 à 3, **caractérisé en ce que** ledit message d'identification (30) se compose d'une première séquence d'initialisation suivie par de l'information codée contenant un code identifiant le transpondeur, ladite séquence d'initialisation permettant la synchronisation de la station de base (20) sur le message d'identification (30).

5. Système de communication selon l'une quelconque des revendications 1 à 4, **caractérisé en ce que** le message d'identification (30) est répété après une pause de durée aléatoire de manière à réduire la probabilité de collision entre les messages d'identification (30) émanant des différents transpondeurs (21, 22, 23).

6. Système de communication selon l'une quelconque des revendications 1 à 5, **caractérisé en ce qu'**au moins un signal contenant de l'information (32, 42, 44) est échangé au cours de ladite fenêtre de communication (60) entre la station de base (20) et un transpondeur préalablement identifié (22).

7. Système de communication selon la revendication 6, **caractérisé en ce que**, au cours de ladite fenêtre de communication (60), ledit transpondeur identifié (22) transmet une information (32) vers la station de base (20).

8. Système de communication selon la revendication 6, **caractérisé en ce que**, au cours de ladite fenêtre de communication (60), la station de base (20) génère une commande (44) devant ultérieurement être exécutée par ledit transpondeur identifié (22).

9. Système de communication selon la revendication 6, **caractérisé en ce que**, au cours de ladite fenêtre de communication (60), la station de base (20) génère dans un premier temps une requête (42) en réponse de laquelle le transpondeur identifié (22) transmet une information (32), puis, dans un deuxième temps, une commande (44) devant ultérieurement être exécutée par ledit transpondeur identifié (22).

10. Système de communication selon l'une quelconque des revendications 6 à 9, **caractérisé en ce que** le transpondeur identifié (22) continue à répéter le message d'identification (30), s'il ne détecte aucun signal contenant de l'information (32, 42, 44) durant une première période de ladite fenêtre de communication (60), cette période ayant une durée prédéfinie.

## Claims

1. Contactless electronic communication system comprising a base station (20) and a plurality of transponders (TR; 21 to 26), the base station (20) comprising transmission means for emitting an electromagnetic field (1) defining a communication volume (2) in which several transponders (21, 22, 23) are susceptible to be situated, each transponder (TR; 21 to 26) comprising means for receiving said electromagnetic field (1) and means for generating, in response to said electromagnetic field (1), an identification message (30) including an identification code susceptible to be read by the base station (20), this base station (20) further comprising means for receiving said identification message (30) emanating from any transponder (22) among said plurality of transponders (TR; 21 to 26), and processing means for checking the validity of said identification message (30), the base station (20) comprising means for providing a communication initiation signal (40) to each transponder (21, 22, 23) from which it receives an identification message (30), this communication system being **characterized in that** this initiation signal is generated in one or more predetermined periods relatively to the generation of said identification message by each transponder, each transponder (TR; 21 to 26) being adapted to open a communication window (60) in response to said communication initiation signal (40) only when it is received during the predetermined period or periods.

2. Communication system according to claim 1, **characterized in that** said communication initiation signal (40) is generated during said identification message (30).

3. Communication system according to claim 2, **characterized in that** said communication initiation signal (40) consists of one or more brief interruptions (50, 51) of the electromagnetic field (1), each interruption being made within the period of one bit.

4. Communication system according to any one of claims 1 to 3, **characterized in that** said identification message (30) comprises a first initialisation sequence followed by coded information containing a code identifying the transponder, said initialisation sequence allowing synchronisation of the base station (20) to the identification message (30).

5. Communication system according to any one of claims 1 to 4, **characterized in that** the identification message (30) is repeated after a pause of random duration in order to reduce the probability of collisions between identification messages (30) emanating from multiple transponders (21, 22, 23).

6. Communication system according to any one of claims 1 to 5, **characterized in that** at least one signal containing information (32, 42, 44) is exchanged during said communication window (60) between the base station (20) and an identified transponder (22).

7. Communication system according to claim 6, **characterized in that**, during said communication window (60), said identified transponder (22) transmits information (32) to the base station (20).

8. Communication system according to claim 6, **characterized in that**, during said communication window (60), the base station (20) generates a command (44) which is subsequently executed by said identified transponder (22).

9. Communication system according to claim 6, **characterized in that**, during said communication window (60), the base station (20) in a first time generates a request (42) in response to which the identified transponder (22) transmits information (32), and then, in a second time, a command (44) which is subsequently executed by said identified transponder (22).

10. Communication system according to any one of claims 6 to 9, **characterized in that** said identified transponder (22) continues to repeat the identification message (30) if it does not detect any signal containing information (32, 42, 44) during a first period of said communication window (60), this period having a predetermined duration.

## Patentansprüche

1. Kommunikationssystem umfassend eine Basisstation (20) und eine Vielzahl von Transpondern (TR; 21 bis 26), wobei die Basisstation (20) Übertragungsmittel zum Aussenden eines elektromagnetischen Feldes (1) umfasst, welches ein Kommunikationsvolumen (2) definiert, in dem sich mehrere Transponder (21, 22, 23) befinden können, wobei jeder Transponder (TR; 21 bis 26) Mittel zum Empfangen des elektromagnetischen Feldes (1) umfasst, und Mittel, um als Antwort auf das elektromagnetische Feld (1) eine Identifikationsbotschaft (30) zu erzeugen, die einen Identifikationskode umfasst, der von der Basisstation (20) gelesen werden kann, wobei diese Basisstation (20) ferner Mittel zum Empfangen der von einem beliebigen Transponder (22) von der Vielzahl von Transpondern (TR; 21 bis 26) ausgehenden Identifikationsnachricht (30) und Verarbeitungsmittel, die eine Überprüfung der Identifikationsnachricht (30) erlauben, umfasst, wobei die Basisstation (20) Mittel zum Liefern eines Signals zum Eröffnen einer Kommunikation (40) an jeden Transponder (21, 22, 23), von dem sie eine ldentifikationsnachricht (30) erhält, umfasst, wobei das Kommunikationssystem **dadurch gekennzeichnet ist, dass** dieses Eröffnungssignal während eines oder mehrerer in Bezug auf die Erzeugung der Identifikationsnachricht durch jeden Transponder vorbestimmter Zeitabschnitte der erzeugt wird, wobei jeder Transponder (TR; 21 bis 26) ausgebildet ist, um nur dann als Antwort auf das Signal zum Eröffnen einer Kommunikation (40) ein Kommunikationsfenster (60) zu öffnen, wenn dieses Signal während des oder der vorbestimmten Zeitabschnitte(s) empfangen wird.

2. Kommunikationssystem nach Anspruch 1, **dadurch gekennzeichnet, dass** das Signal zum Eröffnen einer Kommunikation (40) während der Identifikationsnachricht (30) erzeugt wird.

3. Kommunikationssystem nach Anspruch 2, **dadurch gekennzeichnet, dass** das Signal zum Eröffnen einer Kommunikation (40) aus einer oder mehreren vorübergehenden Unterbrechungen (50, 51) des elektromagnetischen Feldes (1) zusammengesetzt ist, wobei jede Unterbrechung während eines Zeitraumes von einem Bit durchgeführt wird.

4. Kommunikationssystem nach einem der Ansprüche 1 bis 3, **dadurch gekennzeichnet, dass** die Identifikationsnachricht (30) sich zusammensetzt aus einer ersten Initialisierungsabfolge, auf die codierte Information folgt, welche einen den Transponder identifizierenden Code umfasst, wobei die Initialisierungsabfolge die Synchronisierung der Basisstation (20) mit der Identifikationsnachricht (30) erlaubt.

5. Kommunikationssystem nach einem der Ansprüche 1 bis 4, **dadurch gekennzeichnet, dass** die Identifikationsnachricht (30) nach einer Pause von zufallsbedingter Dauer derart wiederholt wird, dass die Wahrscheinlichkeit einer Kollision zwischen den Identifikationsnachrichten (30), die von unterschiedlichen Transpondern (21, 22, 23) ausgehen, verringert wird.

6. Kommunikationssystem nach einem der Ansprüche 1 bis 5, **dadurch gekennzeichnet, dass** wenigstens ein Signal (32, 42, 44), welches Information enthält, während des Kommunikationsfensters (60) zwischen der Basisstation (20) und einem vorher identifizierten Transponder (22) ausgetauscht wird.

7. Kommunikationssystem nach Anspruch 6, **dadurch gekennzeichnet, dass** der identifizierte Transponder (22) während des Kommunikationsfensters (60) eine Information (32) an die Basisstation (20) übermittelt.

8. Kommunikationssystem nach Anspruch 6, **dadurch gekennzeichnet, dass** die Basisstation (20) während des Kommunikationsfensters (60) einen Befehl (44) erzeugt, welcher später von dem identifizierten Transponder (22) ausgeführt werden muss.

9. Kommunikationssystem nach Anspruch 6, **dadurch gekennzeichnet, dass** die Basisstation (20) während des Kommunikationsfensters (60) eine Anfrage (42) erzeugt, auf die der identifizierte Transponder (22) eine Information (32) überträgt, und in einen zweiten Schritt einen Befehl (44) erzeugt, der später von dem identifizierten Transponder (22) ausgeführt werden muss.

10. Kommunikationssystem nach einem der Ansprüche 1 bis 5, **dadurch gekennzeichnet, dass** der identifizierte Transponder (22) die Identifikationsnachricht (30) weiter wiederholt, wenn er während eines ersten Zeitabschnittes des Kommunikationsfensters (60) von vorbestimmter Dauer kein Signal (32, 42, 44) erkennt, welches Informationen enthält.
